# EUROPEAN PATENT APPLICATION

(11) **EP 3 855 345 A1**
(43) Date of publication of application: **28.07.2021**
(21) Application number: 19870247.4
(22) Date of filing: 01.07.2019
(51) Int. Cl.: G06K 9/00

(54) **IMAGE RECOGNITION METHOD, DEVICE AND SYSTEM AND COMPUTING DEVICE**

(30) Priority: 12.10.2018 CN 201811192257
(71) Applicant: HUAWEI TECHNOLOGIES CO., LTD., Shenzhen, Guangdong 518129 (CN)
(72) Inventor: GAO, Shuai, Shenzhen, Guangdong 518129 (CN); LYU, Yueqiang, Shenzhen, Guangdong 518129 (CN); CHEN, Jiahuai, Shenzhen, Guangdong 518129 (CN)
(74) Representative: Pfenning, Meinig & Partner mbB
(86) International application number: PCT/CN2019/094191
(87) International publication number: WO 2020/073697

(57) **Abstract**

This disclosure relates to an image recognition method, apparatus, and system, and a computing device. The method includes: receiving, by a data center, a first feature value sent by a first edge station, where the data center communicates with the first edge station through a network, and the first feature value is obtained by the first edge station by preprocessing a first image obtained by the first edge station; determining a first attribute based on the first feature value; sending a first label to an edge station in an edge station set, where the first label includes a target feature value and the first attribute, the target feature value is a feature value associated with the first attribute, and the edge station set includes the first edge station; receiving at least one image recognition result sent by the edge station in the edge station set; and, determining a location of a target object based on the image recognition result. In this way, a problem that video data is all processed by the data center, causing the data center to have comparatively heavy load, to affect image recognition efficiency can be resolved.

## Description

### TECHNICAL FIELD

This disclosure relates to the field of image recognition, and in particular, to an image recognition method, apparatus, and system, and a computing device.

### BACKGROUND

With acceleration of urbanization, a security protection deployment and control system of a city is increasingly perfect for rapid development of urban road construction and increasingly complex social security situation.

A current deployment and control system mainly includes a data center and a front-end video recording device. The data center is configured with a central database, and the central database records a plurality of face images and a plurality of labels corresponding to the plurality of face images. The deployment and control system is configured to perform face recognition. A specific process includes: sending, by the front-end video recording device, collected video data to the data center in real time; extracting and processing, by the data center, a face image from the received video data; and comparing a processed face image with all face images in the central database, to obtain a similarity comparison result between the face image and all the face images. When a face image whose similarity with the processed face image reaches a preset value exists in the central database, a label corresponding to the face image is used as a result of this image recognition.

However, in the deployment and control system, because the video data is all processed by the data center, load of the data center is comparatively heavy. In addition, when a plurality of frond-end video recording devices send face images to the data center at the same time, the data center needs to process a large quantity of face images in parallel. Therefore, image recognition efficiency is affected.

### SUMMARY

This disclosure provides an image recognition method, apparatus, and system, and a computing device, to resolve a problem that a data center in a related technology has comparatively heavy load and image recognition efficiency is affected.

According to a first aspect, an image recognition method is provided. The method includes: receiving, by a data center, a first feature value sent by a first edge station, where the data center communicates with the first edge station through a network, and the first feature value is obtained by the first edge station by preprocessing a first image obtained by the first edge station; determining a first attribute based on the first feature value, where the first attribute is used to uniquely identify an attribute of a target object identified by the first image; sending a first label to an edge station in an edge station set, where the first label includes a target feature value and the first attribute, the target feature value is a feature value associated with the first attribute, and the edge station set includes the first edge station; receiving at least one image recognition result sent by the edge station in the edge station set, where each image recognition result is determined by an edge station based on a collected second image and the first label; and determining a location of the target object based on the image recognition result.

Because the first edge station preprocesses the obtained image to obtain the feature value corresponding to the image, and a processing task that needs to be executed by the data center is shared. Therefore, load of the data center is reduced, and image recognition efficiency is improved. In addition, the data center sends the first label to the edge station in the edge station set. The edge station may perform recognition processing on the second image based on the first label, to obtain the image recognition result, so that the data center determines the location of the target object based on the recognition result, and the processing task that needs to be executed by the data center is shared. Therefore, the load of the data center is reduced, and the image recognition efficiency is improved.

In a possible implementation, when the target object is a face, both the first image and the second image are face images.

In another possible implementation, before the data center sends the first label to the edge station in the edge station set, the data center selects at least one edge station to form the edge station set. The at least one edge station and the first edge station are located in a same area. The same area may be a geographical area, for example, including at least one of a same city area, a same province area, or a same country area; and the same area may alternatively be a network area, for example, including at least one of a same local area network, a same metropolitan area network, and a same wide area network.

In another possible implementation, there are a plurality of implementations in which the data center selects at least one edge station. The at least one edge station may be selected in ascending order of distances from the first edge station, or the at least one edge station may be selected based on a recognition level of the target object.

In another possible implementation, when the data center selects the at least one edge station based on the recognition level of the target object, a process in which the data center selects the at least one edge station may be: determining, by the data center, the recognition level of the target object; determining an area in which the target object is located based on the recognition level; and determining an edge station in the area in which the target object is located as the at least one edge station. A manner of determining, by the data center, the area in which the target object is located based on the recognition level may be: querying, by the data center, a correspondence between a level and an area based on the recognition level, to obtain the area in which the target is physically located. In the correspondence, the recognition level is positively correlated with a size of a coverage area of the area. Areas in the correspondence include a local area network, a metropolitan area network, and a wide area network, and sizes of coverage areas of the local area network, the metropolitan area network, and the wide area network increase sequentially.

In the foregoing implementation, hierarchical deployment and control of the target object can be implemented, and flexibility of recognition of the target object is improved. In a tracking scenario, flexibility of tracking of the target object is also improved.

In another possible implementation, the data center may further select the at least one edge station based on a plurality of areas obtained through division in advance. For example, the data center determines a first area, where the first area is an area in which the first edge station is located; and determines all edge stations or a specified quantity of edge stations in the first area as the edge station set.

According to a second aspect, another image recognition method is provided. The method includes: sending, by a first edge station, a first feature value to a data center, where the first edge station communicates with the data center through a network, and the first feature value is obtained by the first edge station by preprocessing a first image obtained by the first edge station; receiving a first label, where the first label includes a target feature value and a first attribute, the first attribute is used to uniquely identify an attribute of a target object identified by the first image, the target feature value is a feature value associated with the first attribute, and the first label is data sent by the data center to an edge station in an edge station set, and the edge station set includes the first edge station; determining an image recognition result based on a collected second image and the first label; and sending the image recognition result to the data center, where the image recognition result is used by the data center to determine a location of the target object.

Because the first edge station preprocesses the obtained image to obtain the feature value corresponding to the image, and a processing task that needs to be executed by the data center is shared. Therefore, load of the data center is reduced, and image recognition efficiency is improved. In addition, the first edge station may perform recognition processing on the second image based on the first label, to obtain the image recognition result, and send the image recognition result to the data center, so that the data center determines the location of the target object, and the processing task that needs to be executed by the data center is shared. Therefore, the load of the data center is reduced, and the image recognition efficiency is improved.

In another possible implementation, after receiving the first label, the first edge station may update an edge database based on the first label. Therefore, the first edge station can extract the first label from the edge database when obtaining the second image, to determine the image recognition result of the second image. Therefore, a process in which the first edge station determines the image recognition result based on the collected second image and the first label may include: updating, by the first edge station, a first edge database by using the first label, where the first edge database is a database in the first edge station; and determining, by the first edge station, the image recognition result based on the collected second image and an updated first edge database.

A process in which the first edge station updates the first edge database by using the first label may be: determining, by the first edge station, a second label that is in the first edge database and that meets an update condition; and replacing, by the first edge station, the second label with the first label. The update condition includes at least one of:
in another possible implementation, a hit count of the second label in the first edge database is the least, where the hit count is used to indicate a quantity of images that are identified by the second label and that match to - be-recognized images; and alternatively,
hit duration of the second label in the first edge database is the longest, where the hit duration is used to indicate an interval between a latest hit time point of the image identified by the second label and a current time point.

In another possible implementation, when the target object is a face, both the first image and the second image are face images.

Usually, when a target object appears in an area, a probability that the target object appears in the area is comparatively high. However, because edge stations in the edge station set are located in a same area, and the area is an area of the first image corresponding to the first label obtained by the first edge station, after an edge database of the edge stations in the edge station set is updated based on the first label, the first label can be quickly extracted based on the edge database if the target object appears in the area again, to determine an image recognition result of the target object. In a tracking scenario, the object can be tracked promptly.

According to a third aspect, an image recognition apparatus is provided. The apparatus may include at least one module, and the at least one module may be configured to implement the image recognition method according to the first aspect.

According to a fourth aspect, another image recognition apparatus is provided. The apparatus may include at least one module, and the at least one module may be configured to implement the image recognition method according to the second aspect.

According to a fifth aspect, an image recognition system is provided, including a data center and at least one first edge station. The data center is configured to implement a function of the image recognition apparatus according to the third aspect, and each first edge station is configured to implement a function of the image recognition apparatus according to the fourth aspect.

According to a sixth aspect, a computing device is provided. A server includes a processor and a memory, the memory is configured to store a computer-executable instruction, and when the server runs, the processor executes the computer storage instruction in the memory to perform an operation step of the image recognition method according to any one of the first aspect and the second aspect.

According to a seventh aspect, a computer-readable storage medium is provided. The computer-readable storage medium stores an instruction, and when the instruction is run on a computer, the computer is enabled to perform the methods according to the foregoing aspects.

According to an eighth aspect, a computer program product including an instruction is provided. When the computer program product is run on a computer, the computer is enabled to perform the methods according to the foregoing aspects.

Beneficial effects brought by the technical solutions provided in this disclosure may at least include the following.

According to the image recognition method provided in the embodiments of this disclosure, the edge station preprocesses the obtained image to obtain the feature value corresponding to the image, and the processing task that needs to be executed by the data center is shared. Therefore, the load of the data center is reduced, and the image recognition efficiency is improved. In addition, because the edge station may also perform preliminary recognition processing on the image based on the feature value of the image, the data center does not need to perform further recognition when the attribute of the image is obtained through the recognition, and the processing task that needs to be executed by the data center is shared. Therefore, the load of the data center is reduced, and the image recognition efficiency is improved.

### BRIEF DESCRIPTION OF DRAWINGS

FIG. 1 is a schematic structural diagram of an image recognition system according to this disclosure;
FIG. 2 is a schematic structural diagram of an image recognition system according to this disclosure;
FIG. 3 is a schematic diagram of division of edge stations in an image recognition system according to this disclosure;
FIG. 4 is a schematic diagram of an image recognition process according to this disclosure;
FIG. 5 is a flowchart of an image recognition method according to this disclosure;
FIG. 6 is a flowchart of an image recognition process according to this disclosure;
FIG. 7 is a schematic diagram of a process in which an edge station updates an edge database according to this disclosure;
FIG. 8 is a flowchart of an image recognition method according to this disclosure;
FIG. 9 is a schematic process diagram of an image recognition method according to this disclosure;
FIG. 10 is a block diagram of an image recognition apparatus according to this disclosure;
FIG. 11 is a block diagram of an image recognition apparatus according to this disclosure;
FIG. 12 is a block diagram of a selection module according to this disclosure;
FIG. 13 is a block diagram of an image recognition apparatus according to this disclosure;
FIG. 14 is a block diagram of a determining module according to this disclosure; and
FIG. 15 is a schematic structural diagram of a computing device according to this disclosure.

### DESCRIPTION OF EMBODIMENTS

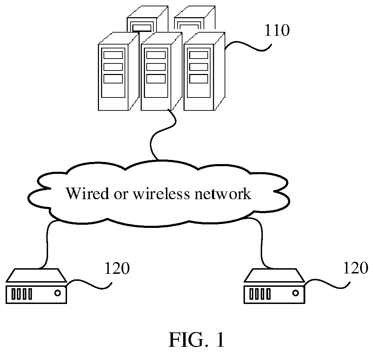

FIG. 1 is a schematic structural diagram of an image recognition system according to an embodiment of this disclosure. The image recognition system is used to recognize an image of a target object, and the target object includes a face, a vehicle, an animal, or the like. The image recognition system includes a data center 110 and at least one edge station 120. In FIG. 1, an example in which the image recognition system includes the data center 110 and two edge stations 120 is used, but this is not limited.

Compared with the data center 110, the edge station 120 is located at a front end of the image recognition system, and is configured to obtain an image and preprocess the image to obtain a feature value. The data center 110 is configured to further process the feature value. For example, the preprocessing process may include a process of target detection, target alignment, and feature value extraction that are for the image. The feature value is used to reflect a feature of the image, and may be a vector or an array. The data center 110 establishes a communication connection to the at least one edge station 120 through a network. The data center 110 is configured to manage the at least one edge station 120. The data center 110 may be one server, or a server cluster including several servers. The servers implement different functions. For example, some servers implement a database function, and some servers implement a server management function. The edge station 120 is an electronic device having an image processing function. For example, the edge station 120 may be a computer or a server.

Optionally, both the data center 110 and the edge station 120 have separate corresponding storage space, and a database application may be deployed in the storage space. The database is used to store labels of a plurality of images, where each label includes a feature value and an attribute, and the feature value and the attribute in each label are in a one-to-one correspondence. The attribute is an inherent characteristic of the object, and may include one or more attribute parameters. The target object is an object that can be recognized by the image recognition system. For example, when the target object is the face, the attribute includes one or more attribute parameters of a name, an age, a gender, and a place of origin. When the target object is the vehicle, the attribute includes one or more attribute parameters of a license plate number and/or a vehicle owner name, a vehicle model, a vehicle body color, and a vehicle logo. When the target object is the animal, the attribute includes one or more attribute parameters of a name, a species name, a hair color, and an age. For one image, the label of the image includes the feature value and the attribute, where the feature value is used to identify the feature of the image, and the attribute is used to identify an attribute of an object in the image.

In this embodiment of this disclosure, a volume of data stored in the storage space of the data center 110 is far greater than a volume of data stored in the storage space of the edge station 120. In an optional implementation, when the image recognition system is initialized, a technician may separately configure a database for the data center 110 and the at least one edge station 120, and each database stores a plurality of labels. In another optional implementation, the technician may configure a central database for the data center 110, and the central database is used to store the plurality of labels. The data center selects the label from the central database and separately delivers the label to the edge station 120. The edge station 120 establishes an edge database in the storage space of the edge station 120 based on the received label, and the edge database stores the received label. The central database may be considered as a full database, and the central database stores labels of all recognizable objects in the image recognition system. The edge database stores some labels in the central database. It should be noted that the foregoing database may perform the storage in a list manner, in other words, each label in the database is recorded in a list maintained by the database, and the list may be a blacklist or a whitelist.

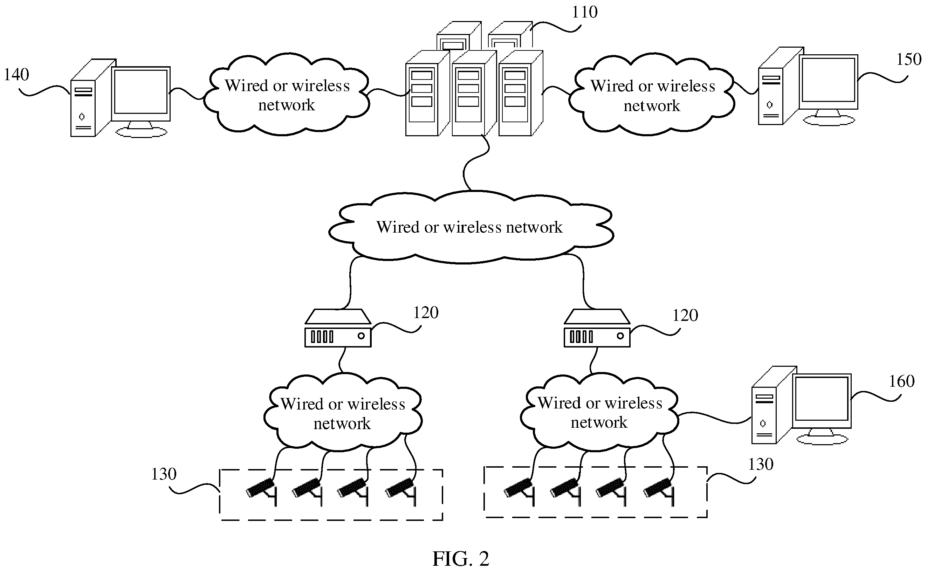

FIG. 2 is a schematic structural diagram of another image recognition system according to this disclosure. As shown in FIG. 2, based on the image recognition system shown in FIG. 1, at least one image obtaining device 130, a resource scheduling device 140, a service management device 150, and an edge management device 160 are further disposed in the image recognition system.

The image obtaining device 130 is configured to collect an image. Each edge station 120 manages a group of image obtaining devices 130. The group of image obtaining devices includes at least one image obtaining device, and usually has 2 to 10 image obtaining devices. Each edge station establishes a communication connection to the image obtaining device through a network, and the image obtaining device is managed by the edge station. The image obtaining device 130 may be a camera. The camera may have a plurality of structures, and may be a camera with a fixed shooting angle, for example, a box camera, or may be a camera with an adjustable shooting angle (that is, a rotatable camera), for example, a pan-tilt-zoom camera or a high speed dome camera (dome camera for short). The camera may also support a plurality of transmission modes, for example, the camera may be an internet protocol camera (internet protocol camera, IPC), and the camera may collect a video or an image. Optionally, a specified image obtaining device may be disposed in each group of image obtaining devices 130, and the specified image obtaining device implements a function of the edge station, in other words, the edge station is integrated into the specified image obtaining device. For example, the edge station 120 may be the IPC integrated with an image processing module and a storage module.

The resource scheduling device 140 and the service management device 150 separately establish a communication connection to the data center 110 through the network. The service management device 150 is configured to manage a service of the data center 110. For example, the service management device 150 may be adapted to configure or update the foregoing central database application. The service management device 150 may further set a type of an object that can be recognized by the image recognition system, and the type includes a face, a vehicle, an animal, or the like. The resource scheduling device 140 is configured to manage resource scheduling of the data center 110. For example, the resource scheduling device 140 may be adapted to configure service-related parameters of a data management center, and the service-related parameters may include a service scope, a quantity of devices, a setting location, and the like.

The edge management device 160 establishes a communication connection to the edge station 120 through the network. The edge management device 160 is configured to assist in managing the edge station 120, for example, managing the edge station in a short distance. A technician may operate or maintain the edge station near the edge station through the edge management device. A browser may be installed in the edge management device 160, and the edge station is managed through a web page. A management client may further be disposed in the edge management device 160, and the edge station is managed through the client. For example, the edge management device may be adapted to configure or update an edge database application, and may further configure the function of the edge station, for example, an image processing function and/or an image storage function. The edge management device 160 may be a smartphone, a computer, a multimedia player, a wearable device, or the like.

It should be noted that, the network used by the devices in FIG. 1 and FIG. 2 for communication may be a wired or wireless network (wireless network). The wired network includes a Transmission Control Protocol/Internet Protocol (Transmission Control Protocol/Internet Protocol, TCP/IP) network, a fiber optic network, or an InfiniBand (InfiniBand, IB) network. The wireless network includes a wireless fidelity (wireless fidelity, Wi-Fi) network, a third generation (3rd-generation, 3G) mobile communication technology network, a general packet radio service (general packet radio service, GPRS) technology, or the like.

In this embodiment of this disclosure, the edge stations in the image recognition system are pre-divided and distributed to a plurality of areas in a specified division manner. The plurality of areas are used to reflect a location relationship (for example, a distance relationship or an adjacency relationship) between edge stations. For example, if the specified division manner is division based on a geographical location, the foregoing areas are geographical areas. For example, the specified division manner is a manner of division based on a city range. If the image recognition system is deployed in China, the edge stations are divided and distributed to a plurality of city areas such as Chongqing, Hangzhou, and Tianjin.

During networking of a communications network, a plurality of network areas are divided, and a geographical location factor is also considered during division of the network areas. Therefore, the foregoing specified division manner may be consistent with a network area division manner, and the foregoing area is the network area. For example, when the specified division manner is a manner of division based on a local area network (local area network, LAN), the edge stations are divided and distributed to a plurality of local area networks. The local area network is a computer group including a plurality of computers in an area that are interconnected. A coverage area of the area is usually within several kilometers.

In this embodiment of this disclosure, each specified division manner may have w subdivision manners, where w is a positive integer, for example, w may be two or three. For the image recognition system, each subdivision manner in the specified division manner may be used to divide and distribute the edge stations in the image recognition system to a plurality of areas with a same coverage range size. Coverage range sizes of areas obtained through division in different subdivision manners are different, in other words, levels of the areas are different.

For example, when the specified division manner is the division based on the geographical location, for example, the specified division manner includes two subdivision manners: the manner of division based on the city range and a manner of division based on a province range. If the image recognition system is deployed in China, and when the manner of division based on the city range is used, the edge stations are divided and distributed to a plurality of urban areas such as Chongqing, Hangzhou, and Tianjin. When the manner of division based on the province range is used, the edge stations are divided and distributed to province areas such as Shanxi, Sichuan, and Guangzhou.

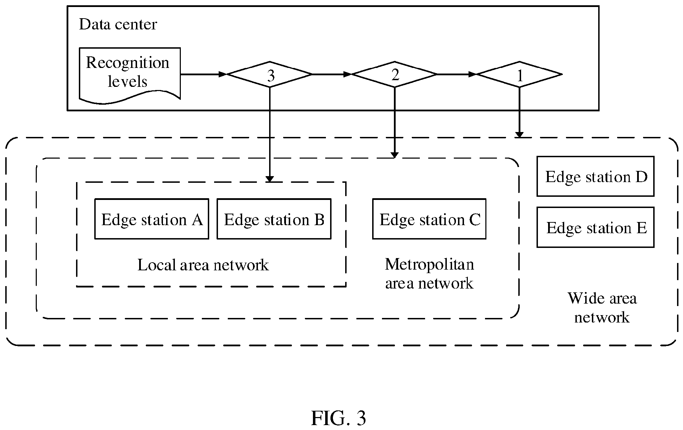

For example, when the specified division manner is division based on the network area, for example, the specified division manner includes three subdivision manners: the manner of division based on the local area network, a manner of division based on a metropolitan area network (metropolitan area network, MAN), and a manner of division based on a wide area network (wide area network, WAN). Referring to FIG. 3, FIG. 3 is a schematic diagram of an area obtained through division that is of the edge stations in the image recognition system and that is based on the foregoing three subdivision manners. When the manner of division based on the local area network is used, the edge stations are divided and distributed to the plurality of local area networks. For example, an edge station A and an edge station B are located in a same local area network (another local area network is not shown in FIG. 3). When the manner of division based on the metropolitan area network is used, the edge stations are divided and distributed to a plurality of metropolitan area networks. For example, the edge station A, the edge station B, and an edge station C are located in a same metropolitan area network (another metropolitan area network is not shown in FIG. 3). When the manner of division based on the wide area network is used, the edge stations are divided and distributed to one or more wide area networks. For example, the edge station A, the edge station B, the edge station C, an edge station D, and an edge station E are located in a same wide area network. The metropolitan area network is a computer communication network established in a city area. The wide area network is also referred to as a remote network, and the network usually spans a large physical area, ranging from dozens of kilometers to thousands of kilometers. The wide area network can connect a plurality of cities or countries, or span several continents and provide long distance communication, to form an international remote network. It can be learned from the foregoing that coverage areas of the local area network, the metropolitan area network, and the wide area network increase sequentially, in other words, levels increase sequentially.

The foregoing division action may be performed by the data center, or may be performed by another device. The another device may upload a division result to the data center. For example, a maintenance engineer uploads the division result to the data center through the resource scheduling device.

Currently, the image recognition system may be applied to different application environments. In this embodiment of this disclosure, the following several application environments are used as examples for description. The image recognition system may be applied to a criminal tracking environment in city management. In this case, the image recognition system is a criminal image recognition system. An object that can be recognized by the criminal image recognition system is the face, and a deployment area of the criminal image recognition system may be streets of a country or a city. In the criminal image recognition system, a list maintained in a database may be a criminal blacklist, and each label recorded in the list includes an attribute and a feature value of a criminal. For example, the attribute is a name, an age, and a gender of the criminal. The criminal may be a criminal, a suspect, or a related person, for example, a relative of the criminal.

The image recognition system may also be applied to a vehicle tracking environment in the city management. In this case, the image recognition system is a vehicle image recognition system. An object that can be recognized by the vehicle image recognition system is the vehicle, and a deployment area of the vehicle image recognition system may be streets of a country or a city. In the vehicle image recognition system, a list maintained in a database is a vehicle list, and each label recorded in the list includes an attribute and a feature value of the vehicle. For example, the attribute is a license plate number, vehicle owner information, a vehicle model, and a vehicle body color. The vehicle owner information may be information such as a name, an age, and a gender of the vehicle owner.

The image recognition system may be further applied to an animal recognition environment. In this case, the image recognition system is an animal image recognition system. An object that can be recognized by the animal image recognition system is the animal, and a deployment area of the animal image recognition system may be an area that needs to be monitored in a zoo or a forest. In the animal image recognition system, a list maintained in a database is an animal list, and each label recorded in the list includes an attribute and a feature value of the animal. For example, the attribute is a name, an age, a gender, and a species of the animal. Certainly, the image recognition system described in this embodiment of this disclosure may be further applied to another application environment, and details are not listed one by one in this embodiment of this disclosure.

In a conventional deployment and control system, because video data is all processed by the data center, load of the data center is comparatively heavy. In addition, when a plurality of frond-end video recording devices send face images to the data center at the same time (a high concurrency scenario occurs), the data center needs to process a comparatively large quantity of face images in parallel. Therefore, image recognition efficiency is affected. In addition, because the front-end video recording device needs to transmit the video data to the data center, comparatively large network bandwidth is occupied, and network overheads are comparatively high.

In the embodiments of this disclosure, both the data center and the edge station can perform an image recognition process. The edge station may share an image processing task of the data center. Therefore, the load of the data center is reduced, and the image recognition efficiency is improved. Both the data center and the edge station use a same target object recognition algorithm (also referred to as a target detection (object detection) algorithm or an object detection algorithm) to perform the image recognition process. For example, when the face needs to be recognized by the target object recognition algorithm, a face detection algorithm is used to perform the image recognition process. For ease of subsequent description, the image recognition process is briefly described in this disclosure. The image recognition process includes three processes: target object detection, target object alignment, and target object recognition.

First, the target object detection includes: determining whether there is a target object in an image, and if there is the target object in the image, determining information such as a location and a size of the target object.

Second, the target object alignment includes: determining a location of a feature point in the image based on the information such as the location and the size of the target object; aligning the location of the target object in the image; and cropping the image obtained after the location of the target object is aligned, to obtain a feature image that includes an area of the target object (which is usually a minimum circumscribed rectangular area of the target object). The feature point is a point at which an inherent feature of the target object is located. For example, when the target object is the face, the feature point is a nose, an eye, a mouth, and/or the like. When the target object is the vehicle, the feature point is a license plate, a vehicle logo, a vehicle front, a vehicle rear, and/or the like. When the target object is the animal, the feature point is a nose, an eye, an ear, a tail, and/or the like.

Third, the target object recognition includes: determining an attribute of the target object in the feature image, where the attribute is used to uniquely identify the target object. For example, when the target object is the face, the attribute can be used to determine which person is the target object. When the target object is the vehicle, the attribute can be used to determine which vehicle is the target object. When the target object is the animal, the attribute can be used to determine which animal the target object is.

Usually, the target recognition has two steps: a feature value extraction process and a feature value comparison process. The feature value extraction process includes obtaining a feature value through calculation based on a to-be-recognized image. The feature value is used to reflect a feature of the image, and may be a vector or an array. When images are different, extracted feature values are different. In an optional implementation, the process of obtaining the feature value through calculation based on the to-be-recognized image may be implemented through a convolutional neural network (convolutional neural network, CNN). For example, the to-be-recognized image may be directly input into the CNN, and the CNN calculates and outputs the feature value. In another optional implementation process, the process of obtaining the feature value through calculation based on the to-be-recognized image may be implemented through another calculation module or a feature extractor. For example, a convolution operation may be performed on the to-be-recognized image, and a result obtained through the operation is used as the feature value. It should be noted that the feature value may be extracted in another manner. This is not limited in the embodiments of this disclosure.

The feature value comparison process means that an extracted feature value is compared with a feature value prestored in a database. When there is a feature value that is in the database and that matches the extracted feature value, an attribute corresponding to the matched feature value is determined as an attribute of the extracted feature value. In this case, the target object recognition is completed. For example, that the feature value in the database matches the extracted feature value means that a similarity between the feature value and the extracted feature value is greater than a specified similarity threshold. For example, the similarity threshold is 70%.

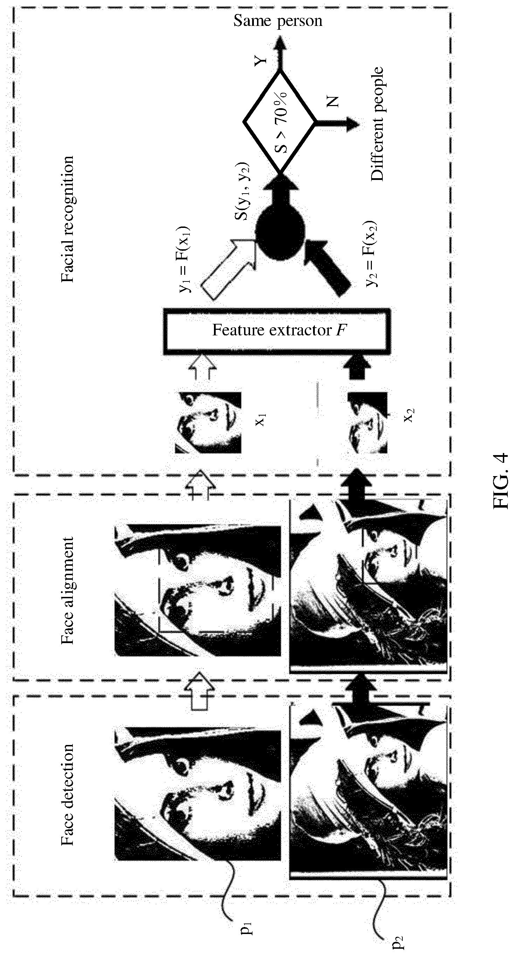

FIG. 4 is a schematic diagram of an image recognition process according to this disclosure. In FIG. 4, an example in which a to-be-recognized target object is a face is used to describe the image recognition process. As shown in FIG. 4, in this case, the foregoing three processes are: face detection (face detection), face alignment (face alignment), and face recognition (face identification). The face recognition may include a feature value extraction process and a feature value comparison process.

As shown in FIG. 4, y₁ is a feature value in a label in a database, and an image of a face uniquely identified by y₁ is p₁. An extraction process of y₁ may include the following. Whether there is a face in the image p₁ is detected through the face detection process. If there is a face in the image p₁, information such as a location and a size of an area in which the face is located in the image p₁is returned. The face alignment process is performed based on the information such as the location and the size of the area in which the face is located, to obtain a face feature image x₁. The feature value extraction process in the face recognition process is performed to extract the feature value y₁ corresponding to the image. The feature value extraction process may be implemented when the face feature image x₁ is input into a feature extractor F.

It is assumed that a to-be-recognized image is an image p₂, feature extraction is performed on the image p₂ to obtain a feature value y₂. An extraction process of y₂ may include the following. Whether there is a face in the image p₂ is detected through the face detection process. If there is a face in the image p₂, information such as a location and a size of an area in which the face is located in the image p₂ is returned. The face alignment process is performed based on the information such as the location and the size of the area in which the face is located, to obtain a face feature image x₂. The feature value extraction process in the face recognition process is performed to extract the feature value y₂ corresponding to the image. The feature value extraction process may be implemented when the face feature image x₂ is input into the feature extractor F. A same algorithm is used in the feature value extraction process of the image p₁ and the feature value extraction process of the image p₂.

After the feature value y₂ is obtained, the feature value y₁ may be compared with the feature value y₂, to obtain a similarity S between the feature value y₁ and the feature value y₂. It is assumed that the similarity threshold is 70%. When S is greater than 70%, it may be determined that the face in the image p₂ and the face in the image p₁ are a same person; and when S is less than 70%, it is determined that the face in the image p₂ and the face in the image p₁ are different persons. The foregoing process of comparing the feature value y₁ with the feature value y₂ may be implemented by a comparator through a comparison function S(y₁,y₂). The comparison function is used to calculate the similarity between y₁ and y₂. When the face in the image p₂ and the face in the image p₁ are the same person, a label to which the feature value y₁ belongs may be obtained. The label includes the feature value y₁ and an attribute G₁, and the attribute G₁ is used to uniquely identify an attribute of the face in the image p₁. For example, if the attribute is Anna, a new label may be created for the image p₂. The label includes the feature value y₂ and the attribute G₁. In this case, the attribute G₁ is used to uniquely identify an attribute of the face in the image p₂. It can be learned that both the face in the image p₂ and the face in the image p₁ are Anna's faces.

Optionally, the foregoing processes of the target object detection, the target object alignment, and the target object recognition may be implemented through a plurality of algorithms. For example, the target object detection, the target object alignment, and the feature value extraction process in the target object recognition may all be implemented through the CNN. The CNN is a feedforward neural network, and is one of extremely representative network architectures in a deep learning technology. An artificial neuron (English: neuron) of the CNN can respond to some surrounding units within a coverage area, and can perform processing based on an image feature. When the CNN is used, a preprocessed image may be directly input, and the CNN outputs a feature value.

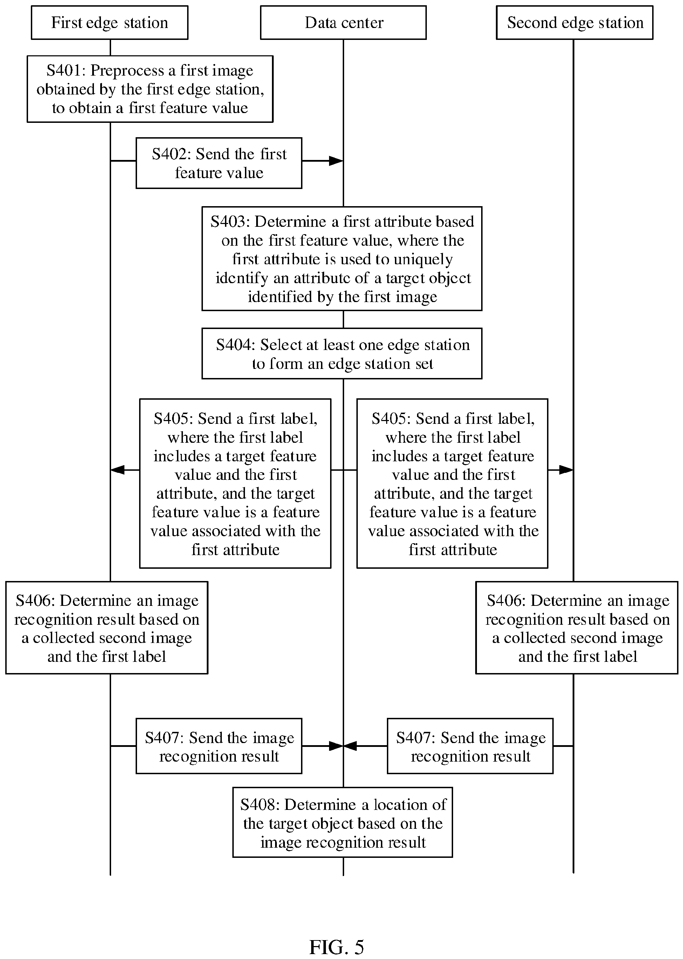

FIG. 5 shows an image recognition method according to this disclosure, and the method may be applied to the system architecture shown in FIG. 1 or FIG. 2. A data center may manage one or more edge stations. In this disclosure, one of the edge stations is used as an example for description. For ease of subsequent description, the edge station is referred to as a first edge station for short. For a working process of another edge station, refer to the first edge station. As shown in FIG. 5, the method includes the following steps.

S401: A first edge station preprocesses a first image obtained by the first edge station, to obtain a first feature value.

It is assumed that an image obtaining device managed by the first edge station is a first image obtaining device. The first edge station may obtain the first image from the first image obtaining device managed by the first edge station, or may obtain the first image in another manner. This is not limited in this disclosure. Then, the first image is preprocessed, so that the first feature value corresponding to the first image is obtained. For the preprocessing process, refer to two processes of the target object detection and the target object alignment in the foregoing image recognition process and the feature value extraction process in the target object recognition process. In other words, the preprocessing process includes the following. The first edge station determines whether there is a target object in the first image. If there is a target object, information such as a location and a size of an area in which the target object is located is determined. Then, a location of a feature point in the first image is determined based on the information such as the location and the size of the area in which the target object is located, and the location of the area in which the target object is located in the first image is aligned. The feature point is a point at which an inherent feature of the target object is located. The image obtained after the location is aligned is cropped, to obtain a feature image that includes the area in which the target object is located. Then, the first feature value is obtained through calculation based on the feature image. One or more of the foregoing processes may be implemented by a CNN, or may be implemented through a target object recognition algorithm.

For example, the first image is one image of videos or images collected by the first edge station through the image obtaining device managed by the first edge station. When the first image is one image of the videos collected by the image obtaining device, the first edge station may extract the first image from the video. For example, each frame of image is extracted from the video as the first image, or one frame of image at an interval of at least one frame of image is extracted as the first image. When the first image is one of the images collected by the image obtaining device, an image is directly selected from the images collected by the image obtaining device as the first image.

It should be noted that the preprocessing process of the first edge station may be the foregoing preprocessing process, or may be another preprocessing process, provided that the corresponding first feature value is obtained through the processing of the first image obtained by the first edge station. This is not limited in this embodiment of this disclosure.

Because the first edge station may obtain the first image, preprocess the first image to obtain the feature value, and share a processing task that needs to be executed by the data center, load of the data center is reduced, and image recognition efficiency is improved.

S402: The first edge station sends the first feature value to a data center.

The first edge station may send the first feature value to the data center through a communication connection between the first edge station and the data center.

Because the first edge station sends the first feature value to the data center without sending the videos or images collected by the image obtaining device managed by the first edge station, and a data volume of the first feature value is far less than that of the videos or the images, network bandwidth usage can be reduced, and network overheads can be reduced. In addition, the data center may directly process the first feature value without processing the first image, and correspondingly, the load of the data center is reduced. Even in a high concurrency scenario, operation overheads of the data center are comparatively low.

S403: The data center determines a first attribute based on the first feature value, where the first attribute is used to uniquely identify an attribute of a target object identified by the first image.

After receiving the first feature value sent by the first edge station, the data center may perform the target object recognition process based on the first feature value, to determine the first attribute. For the process, refer to the feature value comparison process in the foregoing target object recognition process. For example, the process includes the following steps.

The data center separately compares the received first feature value with feature values in a plurality of labels included in a central database. When there is a third feature value matching the first feature value in the central database, an attribute corresponding to the matched third feature value as the first attribute. In this case, the first attribute is the attribute of the target object identified by the first image. When there is no feature value matching the first feature value in the central database, the data center ends the feature value comparison process for the first feature value.

In this embodiment of this disclosure, the feature value may be an array or a vector. The following separately describes the foregoing comparison process through an example in which the feature value is a one-dimensional array and the vector.

When feature values in an image recognition system are all one-dimensional arrays, lengths of the arrays are the same. The foregoing comparison process may include: for any feature value a1 in the plurality of feature values in the central database, separately comparing a first feature value a2 with each bit of a1. An obtained similarity q meets: q = m1/m, where m1 is a quantity of bits that are same in value and that are between the any feature value a1 and the first feature value a2, and m is the length of the array. For example, lengths of a1 and a2 are both 10, that is, m = 10, a1 is "1234567890", and a2 is "1234567880". After a2 is compared with each bit of a1, it is obtained that a first bit to an eighth bit and a tenth bit of a1 and a2 are the same, that is, m1 = 9, and the similarity q = 9/10 = 0.9 = 90%.

When the feature values in the image recognition system are all vectors, the foregoing comparison process may include: for any feature value x1 in the plurality of feature values in the central database, calculating a distance between a first feature value x2 and the any feature value x1, and determining a similarity based on the distance, where the distance is negatively correlated to the similarity, in other words, a smaller distance indicates a larger similarity. For example, the distance may be calculated through a Euclidean distance formula.

For example, that there is a third feature value matching the first feature value in the central database means that a similarity between the third feature value and the first feature value in the central database is greater than a specified similarity threshold. For example, the similarity threshold is 70%.

S404: The data center selects at least one edge station to form an edge station set.

As described above, the specified division manner is the division based on the geographical location or the division based on the network area. When the specified division manner is the division based on the geographical location, the foregoing area may be a geographical area, for example, Shanghai. When the specified division manner is the division based on the network area, the foregoing area may be a network area, for example, a local area network, a metropolitan area network, or a wide area network. In this case, a same area includes at least one of a same local area network, a same metropolitan area network, or a same wide area network.

The step S404 may have a plurality of implementations. In this embodiment of this disclosure, the following three implementations are used as examples for description.

In a first implementation, the data center selects at least one edge station in ascending order of distances from the first edge station.

Optionally, a specified quantity N may be configured for the data center. Based on a geographical location of the first edge station, edge stations other than the first edge station are sorted in ascending order of distances from the first edge station, and first N sorted edge stations are selected as the at least one edge station. N is a positive integer, for example, a value of N ranges from 2 to 16. Usually, N is negatively correlated with a physical range in which the first image obtaining device is deployed. The first image obtaining device is the image obtaining device managed by the first edge station, in other words, a larger range in which the first image obtaining device is deployed indicates a smaller N.

For example, it is assumed that N = 3, and the other edge stations are from an edge station 1 to an edge station 15, the data center sorts the other edge stations in ascending order of distances. An obtained sequence is to select the edge station 1, the edge station 4, the edge station 12, the edge station 13, and the like. The data center selects the first three edge stations as the at least one edge station, in other words, the edge station 1, the edge station 4, and the edge station 12 are selected as the at least one edge station.

In a second implementation, the data center selects at least one edge station based on a plurality of areas obtained through division in advance.

As described above, the edge stations in the image recognition system are pre-divided and distributed to the plurality of areas in the specified division manner, and the data center may select the at least one edge station based on the plurality of areas. A process in which the data center selects the at least one edge station may include: determining a first area, where the first area is an area in which the first edge station is located; and determining all edge stations or a specified quantity of edge stations in the first area as the edge station set, where the edge station set at least includes the first edge station, and optionally, may include at least one other edge station.

In this embodiment of this disclosure, the specified division manner may be the division based on the geographical location or the division based on the network area. When the specified division manner is the division based on the geographical location, the first area may be the geographical area, for example, Shanghai. When the specified division manner is the division based on the network area, the foregoing area may be the network area, for example, the local area network, the metropolitan area network, or the wide area network.

In a third implementation, the data center determines a recognition level of the target object, determines an area in which the target object is located based on the recognition level, and determines an edge station in the area in which the target object is located as the at least one edge station.

Optionally, the data center may query a correspondence between an attribute and a recognition level through the first attribute of the target object, to determine the recognition level of the target object. The correspondence between an attribute and a recognition level may be uploaded by a maintenance engineer to the data center through a resource scheduling device. A plurality of groups of attributes and recognition levels are recorded in the correspondence between an object and a recognition level. In the image recognition system, classification manners of the recognition levels are also different in different application environments.

When the image recognition system is applied to a criminal tracking environment in city management, in the correspondence between an object and a recognition level, the attribute of the object includes a name of a criminal, and the recognition level of the object may be classified based on hazardness corresponding to the attribute. The recognition level is positively correlated to the hazardness corresponding to the attribute, in other words, a higher hazardness indicates a higher level. For example, it is assumed that the attribute includes "Zhang San", and when the criminal Zhang San is a thief with comparatively low hazardness, the recognition level of the object is comparatively low. It is assumed that the attribute includes "Li Si", and when the criminal Li Si is a criminal who commits a serious misconduct such as robbery or abduction, the recognition level of the object is comparatively high. When the image recognition system is applied to a vehicle tracking environment in the city management, in the correspondence between an object and a recognition level, the attribute of the object includes a license plate number of a vehicle, and the recognition level of the object may be classified based on hazardness corresponding to the attribute. The recognition level is positively correlated to the hazardness corresponding to the attribute. For example, it is assumed that the attribute includes "Shan A***7", and when a vehicle whose license plate number is Shan A***7 is a vehicle that runs a red light and that has comparatively low hazardness, the recognition level of the object is comparatively low. It is assumed that the attribute includes "Shan A***8", and when a vehicle whose license plate number is Shan A***8 is a hit-and-run vehicle with comparatively high hazardness, the recognition level of the object is comparatively high. When the image recognition system is applied to an animal recognition environment, in the correspondence between an object and a recognition level, the attribute of the object includes a name of an animal, and the recognition level of the object may be classified based on a rareness degree corresponding to the attribute. The recognition level is positively correlated to the rareness degree corresponding to the attribute. For example, it is assumed that the attribute includes "Yuanyuan", and when the animal Yuanyuan is an antelope with a comparatively low rareness degree, the recognition level of the object is comparatively low. It is assumed that the attribute includes "Doudou", and when the animal Doudou is a panda with a comparatively high rareness degree, the recognition level of the object is comparatively high. Alternatively, the recognition level of the object may be classified based on a specific status of a specific application scenario. This is not limited in the embodiments of this disclosure.

It should be noted that the recognition level may be recorded in the attribute as one attribute parameter of the attribute. In this way, the attribute of the target object may be directly queried to obtain the recognition level.

The following uses an example in which the image recognition system is applied to the criminal tracking environment in the city management for description. The image recognition system is a face image recognition system, and a target object of the face image recognition system is a face. It is assumed that a blacklist stored in the central database of the data center is shown in Table 1. An attribute and a feature value of a criminal are recorded in the blacklist. The attribute includes three attribute parameters: a name, a recognition level, and an association relationship. The feature value is a one-dimensional array with a length of 10, and the recognition level is classified based on hazardness of the criminal. It is assumed that the recognition level is identified by a numerical value. In addition, the recognition level is negatively correlated to the numerical value, and is positively correlated to the hazardness. Therefore, a smaller numerical value corresponding to the recognition level indicates a higher recognition level, and the criminal is more dangerous. A total of 100 labels are recorded in the blacklist. For example, a label 1 in the blacklist includes a name: Zhang San, a feature value: 1234567884, and a recognition level: 1; and the association relationship is a label 2. It is assumed that a first label of the target object is the label 2 in the blacklist. An attribute of the target object is queried, to obtain a recognition level: 2.

**Table 1**

| Label numbers | Names | Feature values | Recognition levels | Association relationships |
|---|---|---|---|---|
| 1 | Zhang San | 1234567884 | 1 | Label 2 |
| 2 | Li Si | 1457681573 | 2 | Label 1 |
| ... | ... | ... | ... | ... |
| 100 | Wang Wu | 5612341545 | 3 | None |

The data center queries a correspondence between a recognition level and an area based on the recognition level, to obtain the area in which the target object is located. The correspondence between a recognition level and an area may be uploaded by the maintenance engineer to the data center through the resource scheduling device. A plurality of groups of recognition levels and areas are recorded in the correspondence between a recognition level and an area. In the correspondence, the recognition level is positively correlated to a size of a coverage area of the area, in other words, when the recognition level is higher, the size of the coverage area of the corresponding area is larger. For example, areas in the correspondence include the local area network, the metropolitan area network, and the wide area network. Sizes of coverage areas of the local area network, the metropolitan area network, and the wide area network increase sequentially. Referring to FIG. 3, the edge stations in the image recognition system are divided based on the foregoing three subdivision manners, to obtain the plurality of areas. The plurality of areas include a plurality of local area networks, a plurality of metropolitan area networks, and a plurality of wide area networks, and the correspondence records these areas. For example, the data center determines, based on the recognition level of the target object, that the area in which the target object is located is the local area network, and determines the edge station in the local area network as the at least one edge station.

It should be noted that the areas in the correspondence may also have other forms, for example, a city area, a province area, and a country area. Sizes of coverage areas of the city area, the province area, and the country area increase sequentially. This is not limited in this disclosure.

In the third implementation, the at least one edge station is determined based on the recognition level of the target object, and the area in which the at least one edge station is located increases with an increase of the recognition level. In other words, when the recognition level is different, the finally determined area in which the at least one edge station is located (that is, the area in which the target object is located) is also different. For example, the area may be one of the local area network, the metropolitan area network, or the wide area network. In this case, hierarchical deployment and control of the target object is implemented based on the recognition level of the target object, and this provides recognition flexibility of the target object.

For example, referring to FIG. 3, it is assumed that in the image recognition system, the data center determines the recognition level of "Zhang San", determines the area in which the target object is located based on the recognition level, and broadcasts a label X in the area in which the target object is located. For example, when the recognition level of "Zhang San" is 3, this indicates that the recognition level of "Zhang San" is comparatively low, and the label X is broadcast to the local area network to which the edge station A and the edge station B belong. When the recognition level of "Zhang San" is 2, this indicates that the recognition level of "Zhang San" is medium, and the label X is broadcast to the metropolitan area network to which the edge station A, the edge station B, and the edge station C belong. When the recognition level of "Zhang San" is 1, this indicates that the recognition level of "Zhang San" is comparatively high, and the label X is broadcast to the wide area network to which the edge station A, the edge station B, the edge station C, the edge station D, and the edge station E belong. In this way, the hierarchical deployment and control may be performed on "Zhang San" based on the recognition level of "Zhang San", to improve the tracking flexibility of "Zhang San".

S405: The data center sends a first label to the edge station in the edge station set, where the first label includes a target feature value and the first attribute, the target feature value is a feature value associated with the first attribute, and the edge station set includes the first edge station.

In FIG. 5, it is assumed that the edge station set includes the first edge station and a second edge station. Actually, the edge station set may further include another edge station. FIG. 5 is merely an example for description.

The first label may be sent in a form of a struct (struct), where the struct is a data set including a series of data of a same type or different types. The target feature value is the feature value associated with the first attribute, in other words, the target feature value is the feature value of the image in which the target object identified by the first attribute is located. Referring to the step S401 and the step S403, the first feature value is the feature value of the first image, and the third feature value is the feature value matching the first feature value. Because the third feature value matches the first feature value, this indicates that the target object in the image identified by the third feature value is consistent with the target object in the first image. Therefore, the target feature value may be the first feature value or the third feature value. Because the first feature value is closer to an obtaining time point of the third feature value (the third feature value is prestored in the central database), the first feature value can better reflect a recent feature of the target object. Therefore, when the feature value in the first label sent by the data center is the first feature value, accuracy of recognizing, by the edge station in the edge station set, the target object can be improved.

In this embodiment of this disclosure, there are a plurality of manners for the data center to send the first label to the edge station in the edge station set. For example, the data center may send the first label to the edge stations in the edge station set at the same time, in other words, a broadcast or multicast of the first label is performed to the edge station set. For another example, the data center sequentially sends the first label to the edge stations in the edge station set. Certainly, the data center may send the first label to the edge station in the edge station set in another manner, provided that the edge stations in the edge station set are finally traversed. This is not limited in this embodiment of this disclosure.

For example, it is assumed that the edge station set includes the first edge station and the second edge station. The data center sends the first label to the first edge station and the second edge station in the broadcast manner.

Usually, after one target object appears in an area (for example, the area in which the at least one edge station is located), another target object associated with the target object is highly likely to appear in the area. For example, when the image recognition system is the criminal tracking system in the city management, after a criminal appears in an area, a criminal gang related to the criminal is highly likely to appear in the area. To improve monitoring and recognition efficiency of the image recognition system, the data center may not only send the first label to the edge station in the edge station set, but also send another label associated with the first label to the edge station in the edge station set. The another associated label may be a label of another target object that has a social relation with the target object identified by the attribute of the first label. The social relation may be a conjugal relation, a criminal gang relation, or the like. The data center may maintain an associated label table. The data center determines, by querying the associated label table, the another label associated with the first label. The associated label table may be uploaded by the maintenance engineer to the data center through the resource scheduling device. The associated label table records labels that are associated with each other. An association relationship between these labels may be preconfigured by the maintenance engineer based on an actual image recognition scenario. For example, the associated label table is established by the maintenance engineer based on correlations of attributes in the labels. For example, when attributes in two labels meet a specified condition, the attributes are correlated, and correspondingly, the labels are correlated. The specified condition may include that there are at least n attribute parameters having same content, where n is a positive integer; and/or contents of specified attribute parameters are the same. For example, it is assumed that n = 2, and the two labels both include an attribute parameter D1, an attribute parameter D2, an attribute parameter D3, and an attribute parameter D4. When content of the attribute parameter D1 and the attribute parameter D2 of a label 1 is the same as content of the attribute parameter D1 and the attribute parameter D2 of a label 2, it is considered that the label 1 and the label 2 are correlated. For another example, it is assumed that both two labels include a specified attribute parameter: a criminal gang. When content of the specified attribute parameter in a label 3 is the same as content of the specified attribute parameter in a label 4, it is considered that the label 3 and the label 4 are correlated. For example, the content of the specified attribute parameter in both the label 3 and the label 4 is a robbery gang AAA.

Optionally, in the central database, for each label, if the label is associated with another label (for the association relationship, refer to the foregoing explanation), a pointer pointing to the another label associated with the label may be added to the label, and the associated another label may be determined based on the pointer.

Optionally, the association relationship may be recorded in the attribute as one attribute parameter. In this way, the attribute of the target object may be directly queried to obtain the label associated with the label in which the attribute is located. For example, referring to Table 1, it is assumed that the first label of the target object is the label 2 in the blacklist. The attribute of the target object is queried, to obtain the association relationship: the label 1. In this case, the label 1 is associated with the label 2.

S406: The edge station in the edge station set determines an image recognition result based on a collected second image and the first label.

The first edge station is used as an example. After receiving the first label, the first edge station may perform the following process to obtain the image recognition result.

S1: A first edge station preprocesses a second image obtained by the first edge station, to obtain a second feature value.

For this process, refer to the process of the step S401. Details are not described in this disclosure again.

The first edge station may obtain the second image from the first image obtaining device managed by the first edge station, or may obtain the second image in another manner. For example, the first image obtaining device is a camera, and the first image obtaining device sends a video to the first edge station in real time or periodically. Because the first image and the second image are obtained at different time points, the two images are different.

S2: The first edge station compares a target feature value in a first label with the second feature value, to obtain a similarity between the target feature value in the first label and the second feature value.

When the feature values in the image recognition system are all one-dimensional arrays, the lengths of the arrays are the same. The comparison process may include: separately comparing the second feature value x3 with each bit of the target feature value x4. An obtained similarity p meets p = m2/m, where, m2 is a quantity of bits that are same in value and that are between the second feature value x3 and the target feature value x4, and m is a ratio of the length of the array. When the feature values in the image recognition system are all vectors, the foregoing comparison process may include: calculating a distance between the second feature value x3 and the target feature value x4, and determining a similarity based on the distance. For example, the distance may be calculated through the Euclidean distance formula. For the step S2, refer to the process in which the data center separately compares the first feature value with the feature values in the plurality of labels included in the central database in the step S403. Details are not described in this disclosure again.

S3: The first edge station determines a recognition result based on the similarity.

When the second feature value matches the target feature value, an image recognition result of the second image includes the attribute of the first label, namely, the first attribute. The image recognition result is used to indicate that the first edge station recognizes an image corresponding to the first attribute, in other words, a target object in the second image is recognized. When the second feature value does not match the feature value included in the first label, the image recognition result of the second image includes the second feature value of the second image. The image recognition result is used to indicate that the second image obtained by the first edge station does not have the first attribute, in other words, the target object in the second image is not recognized, the data center needs to perform further recognition. For example, that the second feature value matches the target feature value means that the similarity between the feature value included in the first label and the second feature value is greater than the specified similarity threshold. For example, the similarity threshold is 70%.

Optionally, the first edge station may alternatively perform only the step S1, in other words, the preprocessing process is performed; and send the second feature value as the recognition result to the data center. Because the first edge station may obtain the second image, preprocess the second image to obtain the feature value, and share the processing task that needs to be executed by the data center, the load of the data center is reduced, and the image recognition efficiency is improved. In addition, if the first edge station performs the step S1 to the step S3, the first edge station may perform preliminary recognition processing on the second image. When an attribute of the second image is obtained through the recognition, the data center does not need to perform the further recognition, and the processing task that needs to be executed by the data center is shared. Therefore, the load of the data center is reduced, and the image recognition efficiency is improved.

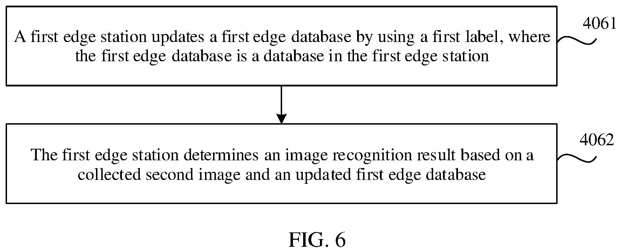

Optionally, the first edge station has storage space of the first edge station, in other words, the first edge station has an edge database. The edge database stores a plurality of labels, and each label includes an attribute and a feature value. The attribute is in a one-to-one correspondence with the feature value, and the attribute includes one or more attribute parameters of a name, an age, a gender, and a place of origin. For a structure of the edge database, refer to a structure of the central database. It should be noted that the edge station in this disclosure may maintain an edge database of the edge station through a cache (cache) mechanism. After receiving the first label, the first edge station may update the edge database based on the first label. Therefore, when obtaining the second image, the first edge station may extract the first label from the edge database, to determine the image recognition result of the second image. As shown in FIG. 6, the step S406 may include the following steps.

S4061: The first edge station updates a first edge database by using the first label, where the first edge database is a database in the first edge station.

If there is remaining space in the first edge database, the first edge station may directly store the first label in the first edge database, to update the first edge database. If there is no remaining space in the first edge database (usually, to ensure effective resource utilization, the edge database is fully occupied, in other words, there is no remaining space), the first edge station determines a second label that meets an update condition and that is in the first edge database. The update condition may be preconfigured, and the second label is replaced with the first label, to obtain an updated first edge database. In a replacement manner, the second label may be deleted from the first edge database, and the first label is added to the first edge database. Alternatively, the first label may be directly used to overwrite the second label.

For example, the update condition may include that a hit count of the second label in the first edge database is the least, where the hit count is used to indicate a quantity of images that are identified by the second label and that match to-be-recognized images (in other words, feature values of the images match feature values in the label). The update condition may alternatively include that hit duration of the second label in the first edge database is the longest, where the hit duration is used to indicate an interval between a latest hit time point of the image identified by the second label and a current time point, and the hit time point is a time point at which the label is hit. Certainly, the update condition may alternatively include both the foregoing two cases. When both the two cases are included, a process in which the first edge station determines the second label that meets the update condition and that is in the first edge database may include: determining, in the first edge station, first several labels whose hit counts are in ascending order, and further determining, from the several labels, a label with longest hit duration as the second label; and alternatively, determining, in the first edge station, first several labels whose hit duration is in descending order, and further determining, from the several labels, a label whose hit count is the least as the second label.

Optionally, the first edge station may configure target attribute parameters in the attribute of each label in the first edge database of the first edge station. The target attribute parameters include a hit count and/or a hit time point. The target attribute parameter of each label is updated when each label is hit. In this way, when determining whether there is the second label that meets the update condition in the edge database of the first edge station, the first edge station only needs to query the target attribute parameter in each label. For example, the target attribute parameters include the hit count and the hit time point. During initialization of the image recognition system, the hit count of each label in the edge database may be set to 0, and the hit time point is an initialization time point. When a label in the edge database matches an image for a first time, it is considered that the label is hit. In this case, the hit count in an attribute of the label is updated to 1, and the hit time point of the label is updated.

It is assumed that a blacklist stored in the first edge database of the first edge station is shown in Table 2. The blacklist may be obtained by processing a blacklist delivered by the data center. For example, the blacklist may be obtained by processing some lists in the blacklist shown in Table 1. An attribute includes three attribute parameters: the name, the hit count, and the hit time point. The blacklist is obtained through deletion of attribute parameters including the recognition level and the association relationship that are recorded in some lists in the blacklist shown in Table 1, and addition of attribute parameters including the hit count and the hit time point. For example, in the first edge database, a label 5 in the blacklist includes a name: Wang Wu, a feature value: 5612341545, a hit count: 0, and a hit time point: 00:00. In this case, if the update condition includes that the hit count in the first edge database is the least, it may be determined, according to Table 2, that the second label is the label 5. If the update condition includes that the hit duration is the longest, it may be determined, according to Table 2, that the second label is the label 5.

**Table 2**

| Label numbers | Names | Feature values | Hit counts | Hit time points |
|---|---|---|---|---|
| 5 | Wang Wu | 5612341545 | 0 | 00:00 |
| 6 | Li Si | 1457681573 | 4 | 2018/9/18, 12:00 |
| 7 | Zhao Liu | 2457681573 | 2 | 2018/9/19, 01:00 |

It should be noted that update conditions of the edge stations may be the same or may be different. This is not limited in this embodiment of this disclosure.

S4062: The first edge station determines the image recognition result based on the collected second image and an updated first edge database.

After preprocessing the collected second image, the first edge station performs the preliminary recognition processing process. Therefore, the second feature value of the second image is compared with a feature value in the updated first edge database, to obtain the image recognition result of the second image. For the preliminary recognition processing process, refer to the foregoing preliminary recognition processing process, details are not described in this embodiment of this disclosure again.

It should be noted that only the first edge station is used as an example for description in the step S406. A process and a principle that are of another edge station other than the first edge station in the at least one edge station and in which the image recognition result is determined based on the collected second image and the first label is the same as that of the first edge station. Details are not described in this disclosure again.

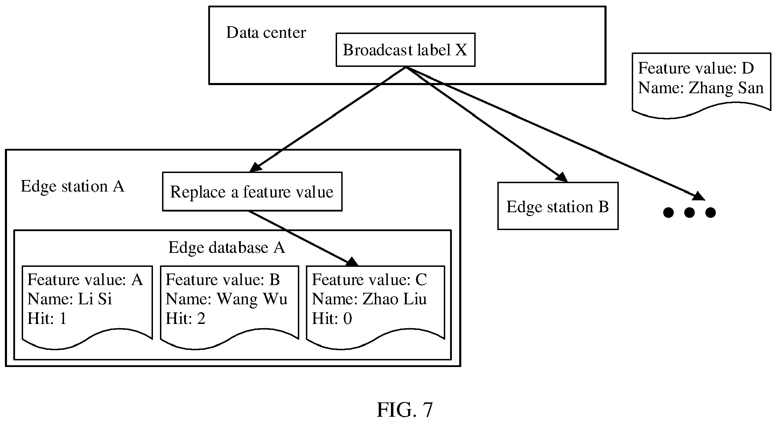

Referring to FIG. 7, FIG. 7 is a schematic diagram of a process of updating, by the edge station A, the edge database. In FIG. 7, that the update condition in which the hit count (a hit for short) is the least is used as an example. After the data center broadcasts the label X, the edge station A replaces, with the received label X, a label that is hit for minimum counts in the edge database A managed by the edge station A. Because in the attribute parameter, the hit count of the label whose name is Zhao Liu is 0, the label whose hit count is 0 is replaced with the label X. In this way, the edge database can be effectively updated.

S407: The edge station in the edge station set sends the image recognition result to the data center.

S408: The data center determines a location of the target object based on the image recognition result.

After the data center receives at least one image recognition result sent by the edge station in the edge station set, the data center may determine, based on the image recognition result, whether the edge station that sends the image recognition result collects the image of the target object. Refer to the step S3, when the second feature value of the second image obtained by an edge station matches the target feature value, the image recognition result of the second image includes the first attribute of the first label. For example, when the image recognition result carries a label, the label includes the first attribute and the feature value. This indicates that the edge station that sends the image recognition result has performed the preliminary recognition, and has recognized an attribute of an image, where the attribute is an attribute of a target object identified by the image. The data center may present the first attribute to a technician through prompt information, to prompt the technician to recognize the first attribute. Further, the data center may determine that the image of the target object is collected by the edge station, and locate the location of the target object based on a location of an image obtaining device managed by the edge station. In this way, the technician can monitor the location of the target object in the data center.

When the image recognition result does not carry the label but carries only the feature value, it indicates that the edge station that sends the image recognition result does not recognize the attribute of the image, and the data center may determine the attribute based on the feature value. For this process, refer to the step S403. Details are not described in this disclosure again.

It should be noted that a sequence of the steps of the image recognition method provided in this embodiment of this disclosure may be properly adjusted, and a step may be added or removed based on a situation. Any variation readily figured out by a person skilled in the art within the technical scope disclosed in this disclosure shall fall within the protection scope of this disclosure, and details are not described herein.

In conclusion, according to the image recognition method provided in this embodiment of this disclosure, the edge station preprocesses the obtained image to obtain the feature value corresponding to the image, and the processing task that needs to be executed by the data center is shared. Therefore, the load of the data center is reduced, and the image recognition efficiency is improved. In addition, because the edge station may also perform the preliminary recognition processing on the image based on the feature value of the image, the data center does not need to perform the further recognition when the attribute of the image is obtained through the recognition, and the processing task that needs to be executed by the data center is shared. Therefore, the load of the data center is reduced, and the image recognition efficiency is improved. Usually, when a target object appears in an area, a probability that the target object appears in the area is comparatively high. However, because the at least one edge station is located in a same area, and the area is an area of the first image corresponding to the first label obtained by the first edge station, the first label is delivered to the at least one edge station, so that the at least one edge station may perform the preliminary image recognition processing based on the first label. If the target object appears in the area again, an attribute of the target object can be quickly recognized. In a tracking scenario, the target object can be tracked promptly. Further, in the third implementation in the step S404, the at least one edge station may be determined based on the recognition level of the target object, to implement the hierarchical deployment and control of the target object. This can improve the recognition flexibility of the target object, and also improve tracking flexibility of the target object in the tracking scenario.

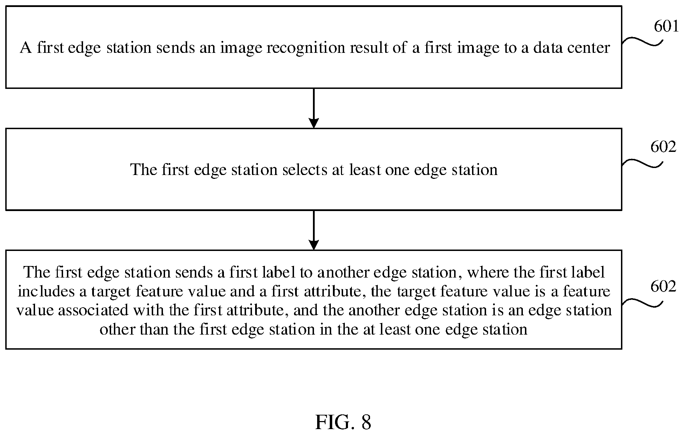

In an optional implementation, before the first edge station sends the first feature value to the data center, the first edge station may recognize the first image based on the first feature value and the first edge database. For the recognition process, refer to the step S403. When there is no feature value matching the first feature value in the first edge database, the step S402 is performed. When there is the feature value matching the first feature value in the first edge database, refer to FIG. 8, and the first edge station may perform the following steps.

S601: A first edge station sends an image recognition result of a first image to a data center.

When there is the feature value matching the first feature value in the first edge database of the first edge station, the first edge station determines an attribute corresponding to the matched feature value as a first attribute of a target object, and the first attribute is used to uniquely identify an attribute of the target object identified by the first image. In this case, the recognition result of the first image includes the first attribute, and the image recognition result is used to indicate that the first edge station recognizes the attribute of the first image, in other words, the target object in the first image is not recognized.

S602: The first edge station selects at least one edge station.

The step S602 may have a plurality of implementations. In this embodiment of this disclosure, the following two implementations are used as examples for description.

In a first implementation, the first edge station selects the at least one edge station based on indication information delivered by the data center, where the indication information is used to indicate the at least one edge station.

For example, the data center may select at least one edge station, and generate the indication information. The first edge station determines the at least one edge station based on the indication information. For a process in which the data center selects the at least one edge station, refer to the foregoing step S404. Details are not described in this disclosure again.

In a second implementation, the first edge station determines a recognition level of the target object, determines an area in which the target object is located based on the recognition level, and determines an edge station other than the first edge station in edge stations in an area in which the target object is located as the at least one edge station.

Optionally, the first edge station may query a correspondence between an attribute and a recognition level based on the first attribute of the target object, to determine the recognition level of the target object. The correspondence between an attribute and a recognition level may be pre-delivered by the data center to the first edge station. For explanation of the correspondence between an attribute and a recognition level, refer to the foregoing step S404.

It should be noted that the recognition level may be recorded in the attribute as one attribute parameter of the attribute. In this way, the attribute of the target object may be directly queried to obtain the recognition level. For example, for a format of a blacklist in the first edge station, refer to Table 1.

The first edge station queries a correspondence between a recognition level and an area based on the recognition level, to obtain the area in which the target object is located. The correspondence between a recognition level and an area may be pre-delivered by the data center to the first edge station. For explanation of the correspondence between a level and an area, refer to the foregoing step S404.

It should be noted that because permission of the first edge station is limited, the correspondence between an attribute and a recognition level delivered by the data center may be at least a part extracted by the data center from a complete correspondence between an attribute and a recognition level based on the permission of the first edge station. The correspondence between a level and an area delivered by the data center may be at least a part extracted by the data center from a complete correspondence between a level and an area based on the permission of the first edge station.

S603: The first edge station sends a first label to another edge station, where the first label includes a target feature value and a first attribute, the target feature value is a feature value associated with the first attribute, and the another edge station is an edge station other than the first edge station in the at least one edge station.

A manner in which the first edge station sends the first label to the another edge station is the same as a manner in which the data center sends the first label to the at least one edge station. Refer to the foregoing step S405. Details are not described in this embodiment of this disclosure again.

Usually, a distance between the first edge station and the another edge station of the at least one edge station is comparatively shorter relative to a distance between the data center and the another edge station. Therefore, correspondingly, transmission duration of the first label between the first edge station and the another edge station is less than transmission duration of the first label between the data center and the another edge station. Therefore, the first edge station sends the first label to the another edge station, and a transmission delay of an image recognition system is reduced. Therefore, tracking efficiency of the target object can be improved especially in a tracking scenario.

After the step S603, an edge station in the at least one edge station determines the image recognition result based on a collected second image and the first label, and sends the image recognition result to the data center. For this process, refer to the foregoing steps S406 and S407. Details are not described in this embodiment of this disclosure again.

Further optionally, when there is the feature value matching the first feature value in the first edge database, the first edge station may further update the first edge database based on the first feature value. An updated first edge database is used by the first edge station to recognize an image sent by an image obtaining device managed by the first edge station. For this process, refer to the foregoing steps S4061 and S4062. Because the first feature value can better reflect a recent feature of the target object, when the first edge station updates the matched feature value based on the first feature value, accuracy of recognizing, by the first edge station, the target object can be improved. Further, the another edge station may also update an edge database of the another edge station. For this process, refer to the foregoing steps S4061 and S4062.

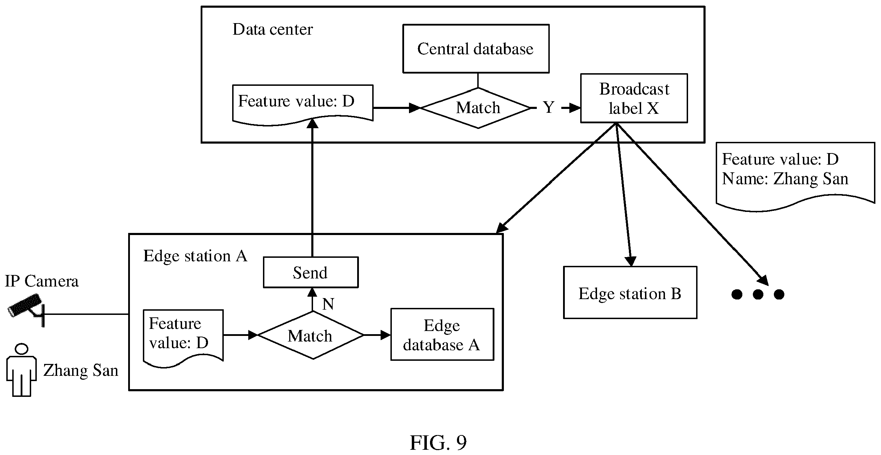

For ease of understanding, in this disclosure, it is assumed that an image recognition system is applied to a criminal tracking environment in city management, the image recognition system is a face image recognition system, and an object that can be recognized by the face image recognition system is a face. FIG. 9 is a schematic process diagram of an image recognition method according to an embodiment of this disclosure. As shown in FIG. 9, an image obtaining device managed by an edge station A obtains a first video with a face "Zhang San". The image obtaining device sends the first video to the edge station A. The edge station A extracts an image from the video and preprocesses the extracted image, and an obtained feature value of "Zhang San" is D. The edge station A sends the feature value D of "Zhang San" to a data center, and the data center performs further processing. Optionally, the edge station A may compare the feature value D with an edge database A managed by the edge station A. When there is no feature value matching the feature value D in the edge database A, the edge station A sends the feature value D of "Zhang San" to the data center. An edge station preprocesses an obtained image to obtain a feature value corresponding to the image, or performs preliminary recognition processing on the image, and shares a processing task that needs to be executed by the data center. Therefore, load of the data center is reduced, and image recognition efficiency is improved.

The data center compares the received feature value D with feature values of labels in a central database, and determines that the feature value D matches the feature value of the label in the database. In this case, the data center determines, based on the label, that an attribute parameter of a target object identified by the feature value D is that a name is "Zhang San". Therefore, the data center selects at least one edge station in ascending order of distances from the edge station A, to obtain the edge station A, an edge station B, and the like. In addition, the data center broadcasts a label X to the at least one edge station. The label X may be the label, or may be a label obtained after the feature value D is used to update a feature value of the label. Because the at least one edge station and the edge station A are located in a same area, the label X is broadcast to the at least one edge station, so that the at least one edge station may perform the preliminary image recognition processing based on the label X. If "Zhang San" appears in the area again, an attribute of "Zhang San" can be quickly recognized, and "Zhang San" can be tracked promptly.

To improve efficiency of monitoring and recognizing the target object by the image recognition system, another label associated with the label X may also be synchronously broadcast to the at least one edge station. For example, if the label associated with the label X is a label Y, the data center synchronously broadcasts the label X and the label Y to the at least one edge station. In this way, the associated label X and the associated label Y can be tracked in a same area at the same time, so that tracking flexibility is improved.

Apparatus embodiments of this disclosure are described below, and may be used to perform the method embodiments of this disclosure. For details that are not disclosed in the apparatus embodiments of this disclosure, refer to the method embodiments of this disclosure.

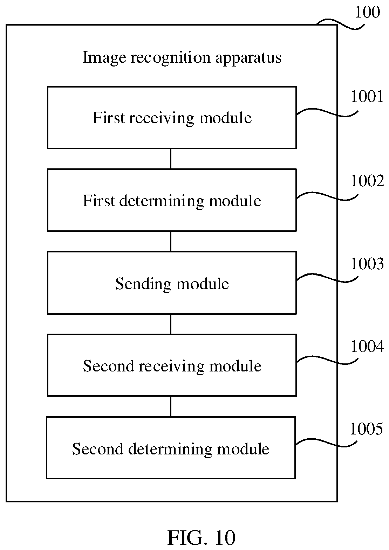

An embodiment of this disclosure provides an image recognition apparatus 100. As shown in FIG. 10, the image recognition apparatus 100 includes:
a first receiving module 1001, a first determining module 1002, a sending module 1003, a second receiving module 1004, and a second determining module 1005.

The first receiving module 1001 is configured to: receive a first feature value sent by a first edge station, and communicate with the first edge station through a network. The first feature value is obtained by the first edge station by preprocessing a first image obtained by the first edge station.

The first determining module 1002 is configured to determine a first attribute based on the first feature value. The first attribute is used to uniquely identify an attribute of a target object in the first image. For example, the method shown in the step S403 in the foregoing method embodiment is implemented.

The sending module 1003 is configured to send a first label to an edge station in an edge station set. For example, the method shown in the step S405 in the foregoing method embodiment is implemented.

The second receiving module 1004 is configured to receive at least one image recognition result sent by the edge station in the edge station set. Each image recognition result is determined by an edge station based on a collected second image and the first label.

The second determining module 1005 is configured to determine a location of the target object based on the image recognition result.

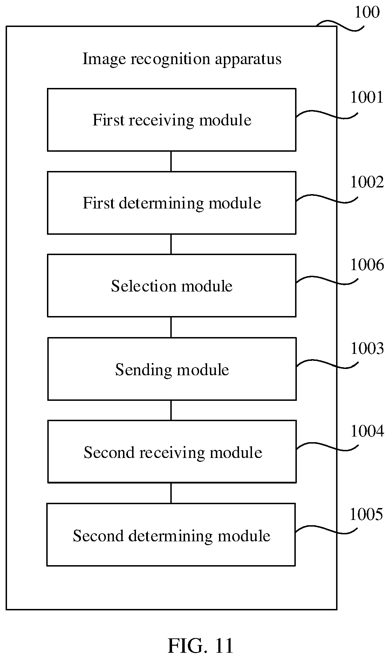

Optionally, the edge station set includes the first edge station and at least one other edge station. As shown in FIG. 11, based on FIG. 10, the apparatus 100 further includes:
a selection module 1006, configured to: before the first label is sent to the edge station in the edge station set, select the at least one edge station to form the edge station set. The at least one edge station and the first edge station are located in a same area, and the area is a geographical range or a network distribution range defined based on a preset rule. The same area includes at least one of a same local area network, a same metropolitan area network, or a same wide area network. For example, the method shown in the step S404 in the foregoing method embodiment is implemented.

Optionally, the selection module 1006 is configured to
select at least one edge station in ascending order of distances from the first edge station.

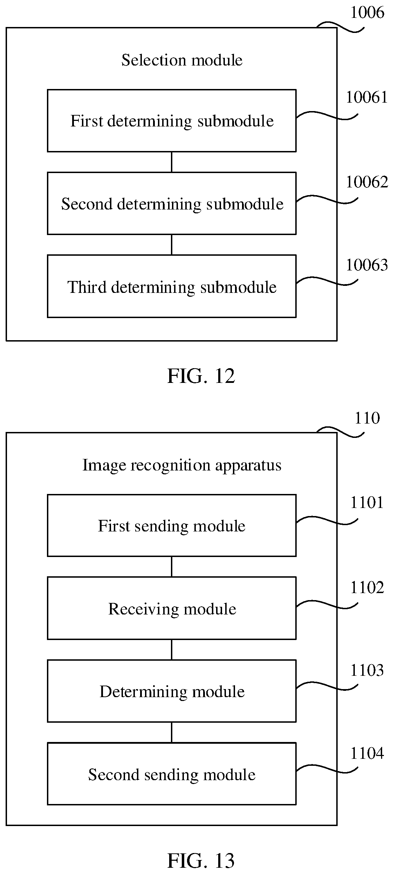

Optionally, as shown in FIG. 12, the selection module 1006 includes:
a first determining submodule 10061, a second determining submodule 10062, and a third determining submodule 10063.

The first determining submodule 10061 is configured to determine a recognition level of the target object.

The second determining submodule 10062 is configured to determine an area in which the target object is located based on the recognition level.

The third determining submodule 10063 is configured to determine an edge station in the area in which the target object is located as the at least one edge station.

Optionally, the second determining submodule 10062 is configured to
query a correspondence between a level and an area based on the recognition level, to obtain the area in which the target is physically located.

In the correspondence, the recognition level is positively correlated with a size of a coverage area of the area. Areas in the correspondence include a local area network, a metropolitan area network, and a wide area network, and sizes of coverage areas of the local area network, the metropolitan area network, and the wide area network increase sequentially.

Optionally, the target object is a face, and both the first image and the second image are face images.

It should be understood that the apparatus 100 in this embodiment of this disclosure may be implemented through an application-specific integrated circuit (application-specific integrated circuit, ASIC), or may be implemented through a programmable logic device (programmable logic device, PLD). The PLD may be a complex programmable logic device (complex programmable logical device, CPLD), a field programmable gate array (field-programmable gate array, FPGA), generic array logic (generic array logic, GAL), or any combination thereof. Alternatively, when the image recognition methods shown in FIG. 5, FIG. 6, and FIG. 8 may be implemented through software, the apparatus 100 and modules of the apparatus 100 may be software modules.

The apparatus 100 in this embodiment of this disclosure may correspondingly perform the methods described in the embodiments of this disclosure. In addition, the foregoing and other operations and/or functions of the units in the apparatus 100 are separately used to implement a corresponding procedure of the methods in FIG. 5, FIG. 6, and FIG. 8. For brevity, details are not described herein again.

In conclusion, according to the image recognition apparatus provided in this embodiment of this disclosure, usually, when a target object appears in an area, a probability that the target object appears in the area is comparatively high. However, because the at least one edge station is located in a same area, and the area is an area of the first image corresponding to the first label obtained by the first edge station, the first label is delivered to the edge station in the edge station set, so that the edge station in the edge station set may perform preliminary image recognition processing based on the first label. If the target object appears in the area again, an attribute of the target object can be quickly recognized. In a tracking scenario, the target object can be tracked promptly.

An embodiment of this disclosure provides another image recognition apparatus 110. As shown in FIG. 13, the image recognition apparatus 110 includes:
a first sending module 1101, a receiving module 1102, a determining module 1103, and a second sending module 1104.

The first sending module 1101 is configured to: send a first feature value to a data center, and communicate with the data center through a network. The first feature value is obtained by the first edge station by preprocessing a first image obtained by the first edge station. For example, the method shown in the step S402 in the foregoing method embodiment is implemented.

The receiving module 1102 is configured to receive a first label. The first label includes a target feature value and a first attribute. The first attribute is used to uniquely identify an attribute of a target object identified by the first image, and the target feature value is a feature value associated with the first attribute. The first label is data sent by the data center to an edge station in an edge station set, and the edge station set includes the first edge station.

The determining module 1103 is configured to determine an image recognition result based on a collected second image and the first label. For example, the method shown in the step S406 in the foregoing method embodiment is implemented.

The second sending module 1104 is configured to send the image recognition result to the data center. The image recognition result is used by the data center to determine a location of the target object. For example, the method shown in the step S407 in the foregoing method embodiment is implemented.

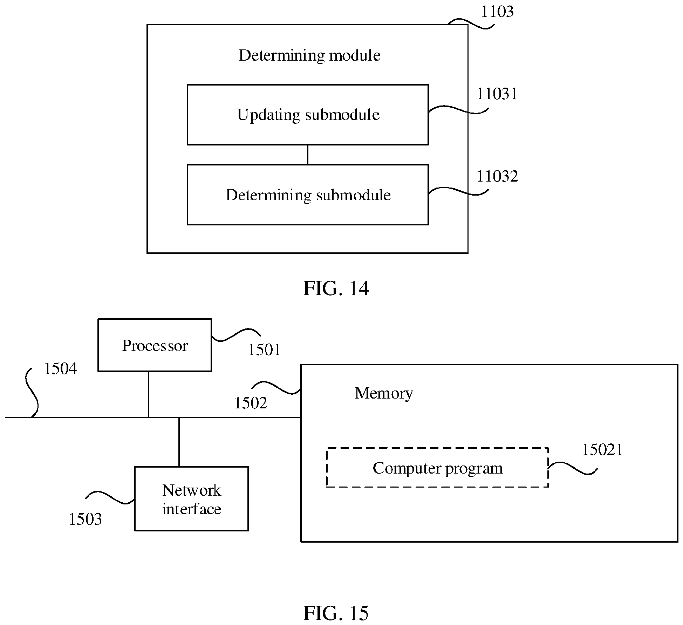

Optionally, as shown in FIG. 14, the determining module 1103 includes:
an updating submodule 11031 and a determining submodule 11032.

The update submodule 11031 is configured to update a first edge database by using the first label. The first edge database is a database in the first edge station. For example, the method shown in the step S4061 in the foregoing method embodiment is implemented.

The determining submodule 11032 is configured to determine the image recognition result based on the collected second image and an updated first edge database. For example, the method shown in the step S4062 in the foregoing method embodiment is implemented.

Optionally, the updating submodule 11031 is configured to:
determine a second label that is in the first edge database and that meets an update condition, and
replace the second label with the first label.

The update condition includes at least one of:
a hit count of the second label in the first edge database is the least, where the hit count is used to indicate a quantity of images that are identified by the second label and that match to-be-recognized images; and alternatively,
hit duration of the second label in the first edge database is the longest, where the hit duration is used to indicate an interval between a latest hit time point of the image identified by the second label and a current time point.

Optionally, the target object is a face, and both the first image and the second image are face images.

It should be understood that the apparatus 110 in this embodiment of this disclosure may be implemented through an application-specific integrated circuit (application-specific integrated circuit, ASIC), or may be implemented through a programmable logic device (programmable logic device, PLD). The PLD may be a complex programmable logic device (complex programmable logical device, CPLD), a field programmable gate array (field-programmable gate array, FPGA), generic array logic (generic array logic, GAL), or any combination thereof. Alternatively, when the image recognition methods shown in FIG. 5, FIG. 6, and FIG. 8 may be implemented through software, the apparatus 110 and modules of the apparatus 110 may be software modules.

The apparatus 110 in this embodiment of this disclosure may correspondingly perform the methods described in the embodiments of this disclosure. In addition, the foregoing and other operations and/or functions of the units in the apparatus 110 are separately used to implement a corresponding procedure of the methods in FIG. 5, FIG. 6, and FIG. 8. For brevity, details are not described herein again.

In conclusion, according to the image recognition apparatus provided in this embodiment of this disclosure, the edge station preprocesses the obtained image to obtain the feature value corresponding to the image, and a processing task that needs to be executed by the data center is shared. Therefore, load of the data center is reduced, and image recognition efficiency is improved. In addition, because the edge station may also perform preliminary recognition processing on the image based on the feature value of the image, the data center does not need to perform further recognition when the label of the image is obtained through the recognition, and the processing task that needs to be executed by the data center is shared. Therefore, the load of the data center is reduced, and the image recognition efficiency is improved. Usually, when a target object appears in an area, a probability that the target object appears in the area is comparatively high. However, because at least one edge station is located in a same area, and the area is an area of the first image corresponding to the first label obtained by the first edge station, the first label is delivered to the edge station in the edge station set, so that the edge station in the edge station set may perform the preliminary image recognition processing based on the first label. If the target object appears in the area again, an attribute of the target object can be quickly recognized. In a tracking scenario, the target object can be tracked promptly.

An embodiment of this disclosure provides an image recognition system, including a data center and at least one first edge station. The data center is configured to implement a function of the foregoing former image recognition apparatus, and each first edge station is configured to implement a function of the foregoing latter image recognition apparatus. For example, the image recognition system may be the image recognition system provided in FIG. 1 or FIG. 2.

FIG. 15 is a schematic structural diagram of a computing device according to an embodiment of this disclosure. As shown in FIG. 15, a server may include a processor 1501 (for example, a CPU), a memory 1502, a network interface 1503, and a bus 1504. The bus 1504 is configured to connect the processor 1501, the memory 1502, and the network interface 1503. The memory 1502 may include a random access memory (random access memory, RAM), or may include a non-volatile memory (non-volatile memory), for example, at least one magnetic disk storage. A communication connection between the server and a communications device is implemented through the network interface 1503 (which may be wired or wireless). The memory 1502 stores a computer program 15021, and the computer program 15021 is used to implement various application functions. The processor 1501 is configured to execute the computer program 15021 stored in the memory 1502, to implement the image recognition method provided in the foregoing method embodiments.

It should be understood that, the processor 1501 in this embodiment of this disclosure may be a CPU, and the processor 1501 may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor or any conventional processor, or the like.

The memory 1502 may include a read-only memory and a random access memory, and provide an instruction and data for the processor 1501. The memory 1502 may further include a non-volatile random access memory. For example, the memory 1502 may further store information of a device type.

The memory 1502 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In addition to a data bus, the bus 1504 may include a power bus, a control bus, a status signal bus, and the like. However, for clear description, various types of buses in the figure are marked as the bus 1504.

It should be understood that the computing device according to this embodiment of this disclosure may be corresponding to the image recognition apparatus 100 and the image recognition apparatus 110 in the embodiments of this disclosure, and may be corresponding to a corresponding body for performing the method in FIG. 5, FIG. 6, or FIG. 8. In addition, the foregoing and other operations and/or functions of the units in the computing device are separately used to implement a corresponding procedure of the methods in FIG. 5, FIG. 6, and FIG. 8. For brevity, details are not described herein again. All or some of the foregoing embodiments may be implemented by software, hardware, firmware, or any combination thereof. When the software is used to implement the embodiments, all or some of the foregoing embodiments may be implemented in a form of a computer program product. The computer program product includes one or more computer instructions. When the computer program instructions are loaded or executed on the computer, the procedures or functions according to the embodiments of this disclosure are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) manner or in a wireless (for example, infrared, radio, and microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid state drive, SSD).

The foregoing descriptions are merely specific implementations of this disclosure. Any variation or replacement readily figured out by a person skilled in the art based on the specific implementations provided in this disclosure shall fall within the protection scope of this disclosure.

## Claims

1. An image recognition method, wherein the method comprises:
receiving, by a data center, a first feature value sent by a first edge station, wherein the data center communicates with the first edge station through a network, and the first feature value is obtained by the first edge station by preprocessing a first image obtained by the first edge station;
determining, by the data center, a first attribute based on the first feature value, wherein the first attribute is used to uniquely identify an attribute of a target object in the first image;
sending, by the data center, a first label to an edge station in an edge station set, wherein the first label comprises a target feature value and the first attribute, the target feature value is a feature value associated with the first attribute, and the edge station set comprises the first edge station;
receiving, by the data center, at least one image recognition result sent by the edge station in the edge station set, wherein each image recognition result is determined by an edge station based on a collected second image and the first label; and
determining, by the data center, a location of the target object based on the image recognition result.

2. The method according to claim 1, wherein the edge station set comprises the first edge station and at least one other edge station, and before the sending, by the data center, a first label to an edge station in an edge station set, the method further comprises:
selecting, by the data center, the at least one edge station, to form the edge station set, wherein the at least one edge station and the first edge station are located in a same area, and the area is a geographical range or a network distribution range defined based on a preset rule.

3. The method according to claim 2, wherein the selecting, by the data center, the at least one edge station comprises:
selecting, by the data center, at least one edge station in ascending order of distances from the first edge station.

4. The method according to claim 2, wherein the selecting, by the data center, the at least one edge station comprises:
determining, by the data center, a recognition level of the target object;
determining, by the data center, an area in which the target object is located based on the recognition level; and
determining, by the data center, an edge station in the area in which the target object is located as the at least one edge station.

5. The method according to claim 4, wherein the determining, by the data center, an area in which the target object is located based on the recognition level comprises:
querying, by the data center, a correspondence between a level and an area based on the recognition level, to obtain the area in which the target is physically located, wherein
in the correspondence, the recognition level is positively correlated with a size of a coverage area of the area, areas in the correspondence comprises: a local area network, a metropolitan area network, and a wide area network, and sizes of coverage areas of the local area network, the metropolitan area network, and the wide area network increase sequentially.

6. The method according to any one of claims 1 to 5, wherein the target object is a face, and both the first image and the second image are face images.

7. An image recognition method, wherein the method comprises:
sending, by a first edge station, a first feature value to a data center, wherein the first edge station communicates with the data center through a network, and the first feature value is obtained by the first edge station by preprocessing a first image obtained by the first edge station;
receiving, by the first edge station, a first label, wherein the first label comprises a target feature value and a first attribute, the first attribute is used to uniquely identify an attribute of a target object in the first image, the target feature value is a feature value associated with the first attribute, the first label is data sent by the data center to an edge station in an edge station set, and the edge station set comprises the first edge station;
determining, by the first edge station, an image recognition result based on a collected second image and the first label; and
sending, by the first edge station, the image recognition result to the data center, wherein the image recognition result is used by the data center to determine a location of the target object.

8. The method according to claim 7, wherein the determining, by the first edge station, an image recognition result based on a collected second image and the first label comprises:
updating, by the first edge station, a first edge database by using the first label, wherein the first edge database is a database in the first edge station; and
determining, by the first edge station, the image recognition result based on the collected second image and an updated first edge database.

9. The method according to claim 8, wherein the updating, by the first edge station, a first edge database by using the first label comprises:
determining, by the first edge station, a second label that is in the first edge database and that meets an update condition; and
replacing, by the first edge station, the second label with the first label, wherein
the update condition comprises at least one of:
a hit count of the second label in the first edge database is the least, wherein the hit count is used to indicate a quantity of images that are identified by the second label and that match to-be-recognized images; and alternatively,
hit duration of the second label in the first edge database is the longest, wherein the hit duration is used to indicate an interval between a latest hit time point of the image identified by the second label and a current time point.

10. The method according to any one of claims 7 to 9, wherein the target object is a face, and both the first image and the second image are face images.

11. An image recognition apparatus, wherein the apparatus comprises
a first receiving module, configured to: receive a first feature value sent by a first edge station, and communicate with the first edge station through a network, wherein the first feature value is obtained by the first edge station by preprocessing a first image obtained by the first edge station;
a first determining module, configured to determine a first attribute based on the first feature value, wherein the first attribute is used to uniquely identify an attribute of a target object in the first image;
a sending module, configured to send a first label to an edge station in an edge station set, wherein the first label comprises a target feature value and the first attribute, the target feature value is a feature value associated with the first attribute, and the edge station set comprises the first edge station;
a second receiving module, configured to receive at least one image recognition result sent by the edge station in the edge station set, wherein each image recognition result is determined by an edge station based on a collected second image and the first label; and
a second determining module, configured to determine a location of the target object based on the image recognition result.

12. The apparatus according to claim 11, wherein the edge station set comprises the first edge station and at least one other edge station, and the apparatus further comprises
a selection module, configured to: before the first label is sent to the edge station in the edge station set, select the at least one edge station, to form the edge station set, wherein the at least one edge station and the first edge station are located in a same area, and the area is a geographical range or a network distribution range defined based on a preset rule.

13. The apparatus according to claim 12, wherein the selection module is configured to select at least one edge station in ascending order of distances from the first edge station.

14. The apparatus according to claim 12, wherein the selection module comprises
a first determining submodule, configured to determine a recognition level of the target object;
a second determining submodule, configured to determine an area in which the target object is located based on the recognition level; and
a third determining submodule, configured to determine an edge station in the area in which the target object is located as the at least one edge station.

15. The apparatus according to claim 14, wherein the second determining submodule is configured to
query a correspondence between a level and an area based on the recognition level, to obtain the area in which the target is physically located, wherein
in the correspondence, the recognition level is positively correlated with a size of a coverage area of the area, areas in the correspondence comprises: a local area network, a metropolitan area network, and a wide area network, and sizes of coverage areas of the local area network, the metropolitan area network, and the wide area network increase sequentially.

16. The apparatus according to any one of claims 11 to 15, wherein the target object is a face, and both the first image and the second image are face images.

17. An image recognition apparatus, wherein the apparatus comprises
a first sending module, configured to: send a first feature value to a data center, and communicate with the data center through a network, wherein the first feature value is obtained by the first edge station by preprocessing a first image obtained by the first edge station;
a receiving module, configured to receive a first label, wherein the first label comprises a target feature value and a first attribute, the first attribute is used to uniquely identify an attribute of a target object in the first image, the target feature value is a feature value associated with the first attribute, the first label is data sent by the data center to an edge station in an edge station set, and the edge station set comprises the first edge station;
a determining module, configured to determine an image recognition result based on a collected second image and the first label; and
a second sending module, configured to send the image recognition result to the data center, wherein the image recognition result is used by the data center to determine a location of the target object.

18. The apparatus according to claim 17, wherein the determining module comprises
an update submodule, configured to update a first edge database by using the first label, wherein the first edge database is a database in the first edge station; and
a determining submodule, configured to determine the image recognition result based on the collected second image and an updated first edge database.

19. The apparatus according to claim 18, wherein the updating submodule is configured to:
determine a second label that is in the first edge database and that meets an update condition; and
replace the second label with the first label, wherein
the update condition comprises at least one of:
a hit count of the second label in the first edge database is the least, wherein the hit count is used to indicate a quantity of images that are identified by the second label and that match to-be-recognized images; and alternatively,
hit duration of the second label in the first edge database is the longest, wherein the hit duration is used to indicate an interval between a latest hit time point of the image identified by the second label and a current time point.

20. The apparatus according to any one of claims 17 to 19, wherein the target object is a face, and both the first image and the second image are face images.

21. An image recognition system, wherein the system comprises a data center and at least one first edge station, the data center is used to implement a function of the apparatus according to claims 11 to 16, and each first edge station is used to implement a function of the apparatus according to claims 17 to 20.

22. A computing device, wherein the server comprises a processor and a memory, the memory is configured to store a computer-executable instruction, and when the server runs, the processor executes the computer storage instruction in the memory to perform an operation step of the method according to claims 1 to 10.
